# EUROPEAN PATENT SPECIFICATION

(11) **EP 2 937 578 B1**
(45) Date of publication and mention of the grant of the patent: **08.02.2017**
(21) Application number: 14165879.9
(22) Date of filing: 24.04.2014
(51) Int. Cl.: F16B 39/10, B60R 9/05

(54) **LOAD CARRIER FOOT**
LASTTRÄGERFUSS
PIED SUPPORT DE CHARGE

(43) Date of publication of application: 28.10.2015
(73) Proprietor: Thule Sweden AB, 330 33 Hillerstorp (SE)
(72) Inventor: Johansson, Johannes, 568 93 Skillingaryd (SE); Ferman, Magnus, 331 54 Värnamo (SE)
(74) Representative: Wallentin, Lars

(56) References cited:
- WO-A1-00/78648
- DE-C1- 3 233 976
- US-A- 493 127
- US-A1- 2012 228 348
- US-B1- 6 264 082

## Description

### BACKGROUND OF THE INVENTION

The present subject matter relates to a load carrier foot.

Known load carrier feet typically comprise a mounting structure for mounting the load carrier feet on a vehicle and a tensioning screw. By rotating the tensioning screw, elements of the mounting structure are moved with respect to each other so as to fix the load carrier foot on the vehicle and/or to fix a load carrier bar on the load carrier foot. In order to ensure a secure fixation, it is necessary to prevent the tensioning screw from coming loose.

From US20120228348 a load carrier foot is known having a pivotally mounted locking lever and a pivotally mounted locking member operatively coupled together.

### SUMMARY

The present subject matter relates to a load carrier foot according to claim 1.

According to a first aspect of the present subject matter, the load carrier foot comprises a mounting structure for mounting the load carrier foot on a vehicle. The mounting structure can comprise a clamping mechanism for clamping the load carrier foot to a fixed roof rail or directly to the roof of the vehicle by gripping a body fold of the vehicle body.

The load carrier further comprises a tightening means which is a tensioning screw. The tightening means is adapted to actuate the clamping mechanism upon operation of the same. Thus, by operating the tightening means, it is possible to actuate the clamping mechanism so as to fix the load carrier foot on the vehicle roof. The mounting structure can comprise a through hole through which the tensioning screw is passed. That is, the lower end of the screw head can be brought into contact with the mounting structure exerting a pressing force against the same.

Furthermore, the load carrier foot comprises a thread lock mechanism for preventing the tightening means from coming loose.

The tensioning screw comprises an engagement portion formed in the outer periphery thereof. The thread lock mechanism comprises an engagement device engageable with the engagement portion of the tensioning screw.

Accordingly, the engagement portion and the engagement device can be correspondingly formed so as to be engageable with each other. In this connection, engageable with each other is to be understood as the engagement portion and the engagement device being formed such that a contact there between is either directly established upon engagement or both elements are formed and placed with respect to each other such that a contact can at least occur under certain circumstances, e.g. upon a slight rotation of the tensioning screw. The contact between both elements blocks a movement of the tightening means or at least makes a movement of the tightening means more difficult. That is, the engagement device is suitable to apply a predetermined force on the engagement portion counteracting a rotational movement of the tensioning screw.

The movement of the tightening means can be prevented by providing a form-fit between the tightening means and the thread lock mechanism. On the other hand, the thread lock mechanism can be constructed to apply a friction force on the tightening means in order to prevent a movement thereof, either fully or to a certain extent. Accordingly, it is possible to provide a thread lock mechanism which, when engaged, enables a movement of the tightening means when a predetermined force is exceeded. Thus, the thread lock mechanism can be engaged with the tensioning screw such that a predetermined torque has to be exceeded in order to rotate the tensioning screw. In case the predetermined torque is not reached, the tensioning screw cannot rotate. Accordingly, an unintentional loosening of the tensioning screw, for example caused by vibrations, is prevented.

The engagement portion is formed in the outer periphery of the tensioning screw. Since the thread lock mechanism comprises an engagement device engageable with the engagement portion of the tensioning screw, the engagement device in this case contacts or is contactable with the outer periphery of the tensioning screw in the engagement portion. Accordingly, an engagement can be established by engaging the engagement device with the engagement portion from radially outside.

The engagement portion is polygonally shaped, preferably hexagonally shaped. Accordingly, the engagement portion can comprise three or more flats and the engagement device can be constructed so as to get in contact with at least one flat or at least a portion of such a flat.

Furthermore, the engagement device can be formed so as to at least partially comprise a shape corresponding to the outer periphery of the engagement portion. For example, in case the engagement portion is hexagonally shaped, it is possible to use an engagement device which contacts three adjacent flats of the engagement portion. While a polygonally shaped engagement portion is most preferable, it is also possible to provide an engagement portion comprising a different shape as long as it is possible to provide an engagement between the engagement device and the engagement portion for preventing a rotation of the tensioning screw. Accordingly, it is possible to use an engagement portion comprising an outer periphery which is continuously formed and is non-circular, elliptical for instance.

The engagement device comprises engagement walls contactable with the engagement portion and being moveable with respect to the engagement portion. The engagement walls can be formed by providing a protrusion on the engagement device. Furthermore, it is possible to provide a recess in the engagement device so as to form the engagement walls. Preferably, the engagement walls comprise flat surfaces.

The width of the engagement walls can be formed so as to correspond to the width of a flat of the polygonal shape, that is, can have a width which is substantially identical to the width of one flat of the polygonal shape. It is furthermore possible to provide an engagement wall having a width which is smaller than the width of a flat of the polygonal shape. As regards the height of the engagement walls, the height can correspond to the dimension of the engagement portion in the longitudinal direction of the tensioning screw or can be smaller. The surface area of the engagement portion can be smaller than the surface area of one flat of the engagement portion. In case the height of the engagement wall is smaller than the dimension of the engagement device in the longitudinal direction, it is, for example, possible to keep the functionality of a screw head, that is to still enable a form-fit contact of a tool with the outer periphery of a screw head with the engagement wall arranged in place. The engagement walls can have an identical shape or can comprise different shapes.

Instead of straight engagement walls, it is possible to provide curled stops, that is engagement device in which a sheet metal strip is rolled so that it comprises a spiral cross section. Such curled stops can be arranged so as to be or get in point or linear contact with the engagement portion depending on the shape of the same.

Preferably, the engagement walls are resilient. A resiliency of the engagement walls can be achieved either by choosing a specific material and/or by choosing a certain construction. For example, an elastic material such as rubber can be used. On the other hand, it is possible to use a more rigid material and form thin protruding walls thereof which also comprise certain flexibility.

According to a preferable embodiment of the present subject matter, the engagement walls are provided on opposite sides of the engagement portion. Accordingly, the engagement walls can be arranged to apply forces facing towards each other on the engagement portion. Such a construction provides a reliable force application on the engagement portion. Furthermore, since forces are applied from opposite sides, no bending moment is exerted on the tensioning screw.

It is also possible to arrange two of the engagement walls at an angle. In this connection, the engagement walls can be arranged with a space there between or can be arranged adjacent to each other. Accordingly, the walls can be formed integrally forming a corner portion at a transition from one engagement wall to the other. Preferably, the angle corresponds to an angle spanned between two flats of the polygonally shaped engagement portion.

According to a further embodiment of the present subject matter, the thread lock mechanism further comprises a swivel arm. The swivel arm can be mounted on the mounting structure pivotably about a pivot axis which is substantially parallel to the longitudinal axis of the tensioning screw. Preferably, the swivel arm is pivotable in a pivot plane perpendicular to the pivot axis. The engagement device can be provided on the swivel arm and can be engageable with the engagement portion by a pivoting motion of the swivel arm in the pivot plane.

The swivel arm can be mounted to the mounting structure at one end thereof and the engagement device can be provided at the other end thereof. Furthermore, the swivel arm can have an elongate shape and can comprise a straight or curved shape. Preferably, the swivel arm is constructed such that it is pivotable in the pivot plane only. Thus, the swivel arm can be constructed and can be mounted in such a way that it is substantially not moveable in a direction perpendicular to the pivot plane. In this connection, the engagement device is constructed so as to be able to accommodate the engagement portion therein by pivotably moving the swivel arm. That is, in the engagement portion, an opening can be formed in the leading end of the swivel arm.

The swivel arm can further comprise an actuating portion which is suitably formed to be grasped by a user. Therefore, the user can move the swivel arm so as to engage the engagement device by means of the engagement portion. In order to lock the movement of the swivel arm, the swivel arm can be formed so as to have an abutment portion contactable with a cover of the load carrier foot. In other words, the cover of the load carrier foot can be formed with a stop either completely blocking the movement of the swivel arm or allowing a movement of the swivel arm to a certain extent while the thread locking function remains effective. Preferably, the stop is formed so as to be contactable with the actuating portion. The stop can be a protrusion extending from a wall of the cover.

Preferably, the engagement device is formed as a claw-like portion adapted to partially surround the engagement portion. The claw-like formed engagement device can comprise at least two contact areas contactable with the outer surface of the engagement portion. Preferably, two of the at least two contact areas are provided on opposite sides of the engagement portion. Preferably, the engagement device comprises an opening which is open in the engagement direction.

Advantageously, the swivel arm comprises a plate extending substantially in the pivot plane and walls extending substantially perpendicular to the plate. The engagement device can be formed by suitably arranging the walls. For example, it is possible to arrange the walls with a distance between the same so as to form a space in which the engagement portion can be accommodated. The walls can be integrally formed with the plate. Furthermore, it is possible to use different materials for the plate and the walls. More precisely, the rigidity of the material used for the plate can be higher than the rigidity used for the walls. With such an arrangement, it is possible to provide walls having a specific flexibility. Consequently, the walls used for engaging the engagement portion are able to flex at their free ends. Hence, the engagement device can be constructed such that the space provided between the walls used for engaging the engagement portion can be smaller than the maximum outer diameter of the engagement portion.

According to a preferable construction, the plate is provided over the entire range of the swivel arm. In this construction, the walls forming the engagement device protrude from the plate. According to another preferable construction, the plate does not range over the entire range of the swivel arm. According to this construction, it is possible to provide one wall protruding from the plate in a perpendicular direction and to provide another wall protruding radially and curved from the radial outer end of the plate. Accordingly, it is possible to use a construction in which the plate covers the tensioning screw in case the engagement device is engaged with the engagement portion or to use a construction in which the claw-like portion protrudes from a radial end of the plate so that a hook is formed on the end of the swivel arm which is engageable with the engagement portion.

Preferably, the engagement device is lockably moveable in a direction perpendicular to the longitudinal axis of the tensioning screw. In this connection, lockably moveable means that the engagement device is moveable as long as the movement is not blocked by a suitable blocking means. The movement can be blocked by means of an additional element. For example, the load carrier foot can comprise a cover for covering the interior of the load carrier foot and the cover can be adapted to block the movement of the engagement device. For that purpose, the cover can comprise a protrusion getting near or contacting the engagement device upon mounting the same. Accordingly, a construction is achieved in which the engagement device is moveable in a direction perpendicular to the longitudinal axis of the tensioning screw as long as the cover is not provided on the load carrier foot and in which the movement of the engagement device is blocked in case the cover is provided on the load carrier foot.

The engagement device can comprise a base member and two walls protruding therefrom. Advantageously, both of the two walls extend substantially perpendicular to base member. The base member and the walls are guided so as to be moveable perpendicular to the longitudinal axis of the tensioning screw and are freely moveable as long as no cover is provided on the load carrier foot. For guiding purposes, the base member can comprise an opening through which the tensioning element, the tensioning screw for instance, is passed. The opening can comprises a width slightly larger than the outer diameter of a tensioning screw portion. With such a construction, the movability of the engagement device with respect to the tensioning screw is guaranteed. Furthermore, the opening comprises a length enabling the engagement device to move relative to the tensioning screw such that the two walls can move away from the engagement portion to an extent that the two walls do not block the rotation of the tensioning screw.

According to a preferable arrangement, the tensioning screw comprises a hexagonal outer shape and the walls of the engagement device are able to get in contact with two of the flats of the hexagonal shape. In case no cover is provided on the load carrier foot, the engagement device is pushed away from the tensioning screw in case the same is rotated. In other words, the walls of the engagement device ride over the flats and edges of the hexagonal outer shape of the screw head. Accordingly, the tensioning screw is rotatable in case the cover is not provided on the load carrier foot. On the contrary, in case the cover is provided on the load carrier foot, the movement of the engagement device is blocked so that the rotation of the tensioning screw cannot or at least cannot substantially effect a movement of the walls in the direction perpendicular to the longitudinal axis of the tensioning screw. Consequently, the walls exert a pushing force on or get in contact with the outer periphery of the tensioning screw and therefore prevent a rotation of the same.

According to a preferable construction, the engagement device is prestressed so as to continuously apply a force on the engagement portion in a direction perpendicular to the longitudinal axis of the tensioning screw. For example, a spring element can be provided so as to prestress the engagement device or the engagement device can be constructed so as to comprise such a spring element function. The thread lock mechanism can comprise a blade spring and the engagement device can be provided on an end of the blade spring. According to this construction, the engagement device is moveable in the longitudinal direction of the blade spring against the blade spring force. Depending on the construction, the engagement device exerts a tensile or a pushing force on the engagement portion.

The use of an engagement device comprising a blade spring is particularly advantageous for an arrangement in which two tensioning screws are used in the load carrier foot. In such a construction, the engagement device can be provided on each end of the blade spring, one for each tensioning screw. Each of the two engagement device can comprise an opening for passing a tensioning screw there through. The opening has a width slightly larger than a corresponding supporting portion of the tensioning screw and a length enabling a movement of each engagement device relative to the tensioning screw so that the walls can be moved relative to the tensioning screws. As already described above, the blade spring can be prestressed. In other words, the blade spring can be configured such that the walls of the engagement device are pushed against the engagement portion either by a tensile or a pushing force. It is, however, possible to use a construction in which a blade spring is used which is not prestressed. In this case, for effecting the locking action, it is necessary to push the blade spring so that the engaging means is engaged with the engagement portion of the tensioning screw.

According to a further embodiment of the present subject matter, the engagement walls are arranged parallel to and spaced from each other. Accordingly, the engagement walls can be arranged on opposite sides of the engagement portion. Preferably, the engagement portion comprises an even number of flats and the distance between the two engagement surfaces of the engagement walls is smaller than the maximum outer diameter of the engagement portion. Accordingly, the engagement surfaces can be arranged such that in case the engagement portion comprising an even number of flats is arranged such that the flats are in parallel to the engagement surfaces, a small gap is arranged between the engagement walls and the flats or the engagement surfaces contact the flats.

According to a further preferable embodiment of the present subject matter, the engagement device comprises an opening accommodating the tensioning screw. Accordingly, the engagement device can have a construction which allows the tensioning screw to pass the same. For example, the engagement device can comprise a through hole through which the tensioning screw can be passed. In case the engagement device shall be moveable to a direction perpendicular to the longitudinal axis of the tensioning screw, the through hole can comprise an elongate shape. Thus, when the tensioning screw is inserted in the elongate through hole, the engagement device is moveable to a certain extent.

Preferably, the engagement device is adapted to apply a predetermined torque on the engaging portion wherein the predetermined torque counteracts a loosening torque of the tensioning screw.

According to a further embodiment of the present subject matter, the engagement device can be integrally formed from sheet metal by bending, and the the walls can be formed straight or curled. Furthermore, in case the walls are formed straight, the walls can be formed inclined towards the engagement portion of the tensioning screw. Accordingly, an arrangement can be used in which the free end of the wall is nearer to the engagement portion than the root section of the wall. The walls can be leaned against the engagement portion, e.g. the screw head of the tensioning screw, with their free ends. In this configuration, the distance between the free end of the walls and the flats of the screw head can be provided close to zero or it is possible to even arrange the wall such that no distance is provided between the free ends of the walls and the engagement portion. In the latter case, the free ends always contact the screw head. In this connection, the flexibility of the wall is adapted to this configuration in that the free ends are pushable in a direction substantially perpendicular to the longitudinal axis of the tensioning screw when the screw head is turned.

According to a further preferable embodiment, the engagement device is an elastic element, preferably made of plastic foam material, adapted to be pushed against the engagement portion of the tensioning screw for applying a counterforce for preventing the tensioning screw from coming loose. For example, the elastic element can be fixed on the inner side of a cover for covering the interior of the load carrier foot. By this, it is possible to arrange the elastic element so that in case the cover is mounted on the load carrier foot, the elastic element is pushed against the engagement portion of the tensioning screw. By pushing the elastic element against the engagement portion of the tensioning screw the elastic element is deformed such that the engagement portion of the tensioning screw is partially surrounded by the same leading to a connection comprising both a friction fit and a form fit component. For example, in case the engagement portion of the tensioning screw is provided in the form of a hexagonal screw head and the elastic element is pushed against the screw head, an impression having a hexagonal shape is formed in the elastic element wherein the elastic element partially extends along the flats of the screw head in the longitudinal direction of the tensioning screw. Consequently, a force transmitting connection is achieved in which the friction fit component results from the cooperation between the screw head surface and the surface of the elastic element and the form fit component results from the reproduction of the hexagonal shape of the screw head in the elastic element engaging with the flats of the screw head.

### BRIEF DESCRIPTION OF THE DRAWINGS

- Figure 1: shows a perspective view of a load carrier according to the present subject matter;
- Figure 2: shows a mounting structure and a thread lock mechanism of a load carrier foot according to a first embodiment of the present subject matter;
- Figure 3: shows the thread lock mechanism of the load carrier foot according to the first embodiment in a locking state;
- Figure 4: shows a sectional view showing the construction of the thread lock mechanism of the load carrier foot according to the first embodiment in detail in an unlocking state;
- Figure 5: shows a sectional view of the thread lock mechanism of the load carrier foot according to the first embodiment in a locking state;
- Figure 6: shows a load carrier foot according to a second embodiment of the present subject matter;
- Figure 7: shows a perspective view of the thread lock mechanism of the load carrier foot according to the second embodiment of the present subject matter shown in Figure 6;
- Figure 8: shows an engagement device of the thread lock mechanism of the load carrier foot according to the second embodiment of the present subject matter;
- Figure 9: shows the engagement device according to Figure 8 in combination with a tensioning screw;
- Figure 10: shows a third embodiment of a load carrier foot according to the present subject matter;
- Figure 11: shows an engagement device of the load carrier foot according to the third embodiment of the present subject matter together with two tensioning screws;
- Figure 12: shows a thread lock mechanism of a load carrier foot according to a fourth embodiment of the present subject matter;
- Figure 13: shows a perspective view of the thread lock mechanism shown in Figure 12;
- Figure 14: shows a plan view of an engagement device of the thread lock mechanism shown in Figures 12 and 13;
- Figure 15: shows an engagement device of a thread lock mechanism of a load carrier foot according to a fifth embodiment of the present subject matter;
- Figure 16: shows a plan view of an engagement device of a thread lock mechanism of a load carrier foot according to a sixth embodiment of the present subject matter;
- Figure 17: shows a side view of the engagement portion shown in Figure 16;
- Figure 18: shows a perspective view of the interior of a load carrier foot according to a modification of the sixth embodiment of the present subject matter;
- Figure 19: shows a perspective side view of the thread lock mechanism according to the modification shown in Figure 18; and
- Figure 20: shows a thread lock mechanism according to a seventh embodiment of the present subject matter.

### DESCRIPTION OF THE EMBODIMENTS

In the following, embodiments of the present subject matter will be explained based on the drawings. It is noticed that the drawings show specific embodiments as explained below and further alternative modifications as specified in the description are at least in part not illustrated therein. Furthermore, same reference signs used in the Figures denote same components.

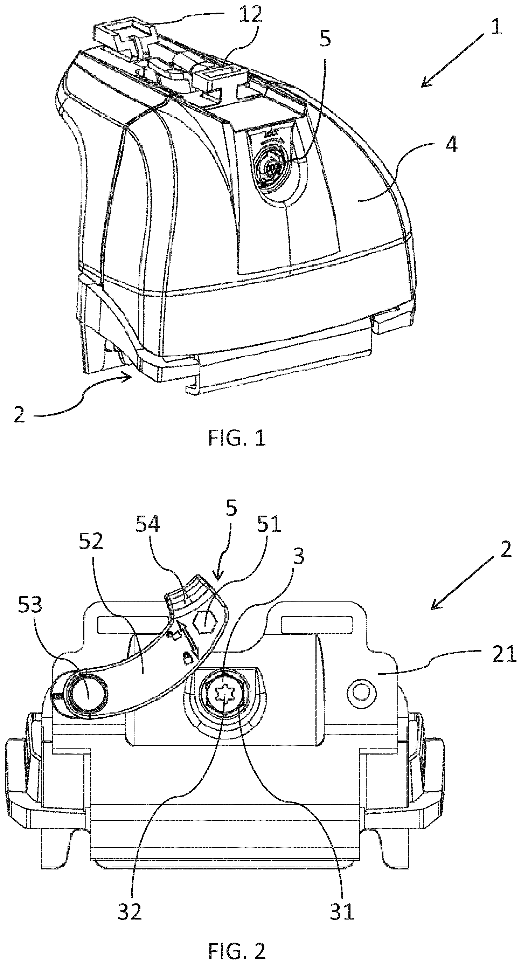

Figure 1 shows a load carrier foot 1 according to the present subject matter. The load carrier foot 1 comprises a mounting structure 2 for mounting the load carrier foot 1 on a vehicle.

Furthermore, the load carrier foot 1 comprises a cover 4 for covering at least a part of the mounting structure 2. The cover 4 is locked to the load carrier foot 1 by means of a locking mechanism 11. Moreover, as is also shown in Figure 1, the load carrier foot has two coupling elements 12 for establishing a fixed connection between a load carrying bar (not shown) and the load carrier foot 1. The locking mechanism 11 comprises a locking element which upon rotation in counter-clockwise direction unlocks the cover 4. In case the cover 4 is unlocked, it can be removed from the load carrier foot 1 in order to get access to the interior of the load carrier foot 1.

### EMBODIMENT 1

In Figure 2, the interior of a load carrier foot according to a first embodiment of the present subject matter is shown. The outer appearance of the load carrier foot corresponds to the load carrier foot shown in Figure 1. In Figure 2, the cover 4 is removed from the load carrier foot 1. Furthermore, other elements of the load carrier foot shown in Figure 1 have been omitted for the sake of clarity.

As is shown in Figure 2, removing the cover 4 reveals parts of the mounting structure 2, a tensioning screw 3 and a thread lock mechanism 5 for preventing the tensioning screw from coming loose.

The mounting structure 2 comprises a support 21 having an opening into which the tensioning screw 3 is inserted. Furthermore, the thread lock mechanism 5 is also supported on the support 21 as will become apparent in the following.

In the load carrier foot according to the first embodiment, the tensioning screw 3 is a hex cap screw with a hexagonal head 31 comprising a six-point star shaped pattern, more precisely a torx shape, as screw drive 32. By use of a corresponding wrench, it is possible to drive the tensioning screw 3 in the clockwise and counter-clockwise direction. The outer circumferential surface of the screw head 31 comprising the hexagonal shape functions as an engagement portion according to the present subject matter which is engageable with an engaging means of the thread lock mechanism 5.

According to the present first embodiment, the thread lock mechanism comprises a swivel arm 5 having an engaging portion 51 as an engagement device at one end thereof and being pivotably coupled to the support 21 by means of a pivot pin 53 preferably integrally formed with the swivel arm 5. As is shown in Figure 2, the pivot axis of the pivot pin 53 is in parallel to the longitudinal axis of the tensioning screw 3. Accordingly, it is possible to pivotably move the swivel arm 5 in a plane substantially perpendicular to the longitudinal axis of the tensioning screw 3.

The swivel arm 5 further comprises an operating section 54 which can be grasped by a user for effecting a pivoting movement of the swivel arm 5. According to the embodiment, the operating section 54 is provided at the same end of the swivel arm 5 where the engagement device 51 of the swivel arm 5 is provided.

Figure 2 shows the thread lock mechanism in an unlocking state. More precisely, as is shown in Figure 2, the swivel arm 5 is in a position where the engaging portion 51 is removed from the hexagonal shaped screw head 31. Accordingly, the engaging portion 51 is disengaged from the screw head 31. Thus, a rotation of the tensioning screw 3 is possible. In order to engage the thread lock mechanism with the tensioning screw 3, the swivel arm 5 is moved in the clockwise direction in order to engage the engaging portion 51 with the screw head 31.

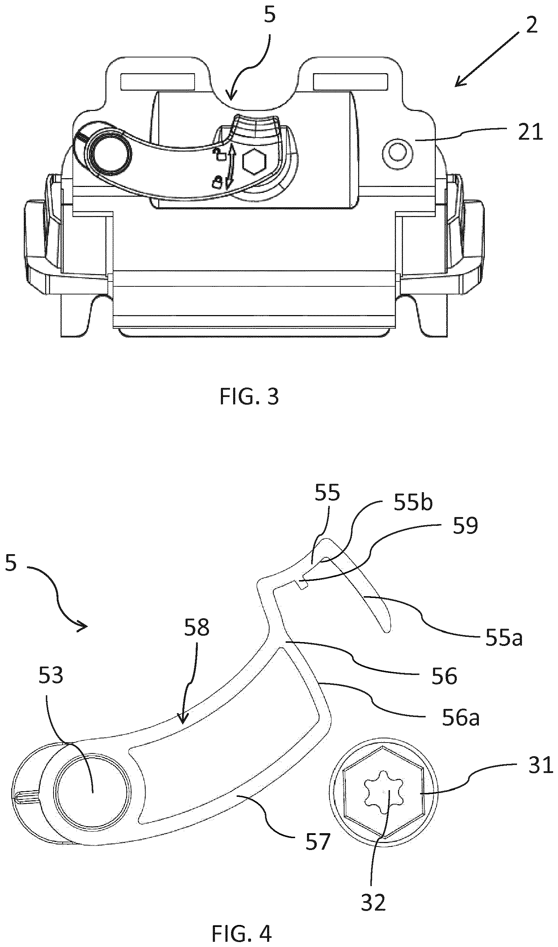

Figure 3 shows a state in which the swivel arm 5 has been rotated in the clockwise direction into a position in which the engaging portion 51 is in engagement with the screw head 31 of the tensioning screw 3. In other words, a locking state of the thread lock mechanism is shown in Figure 3.

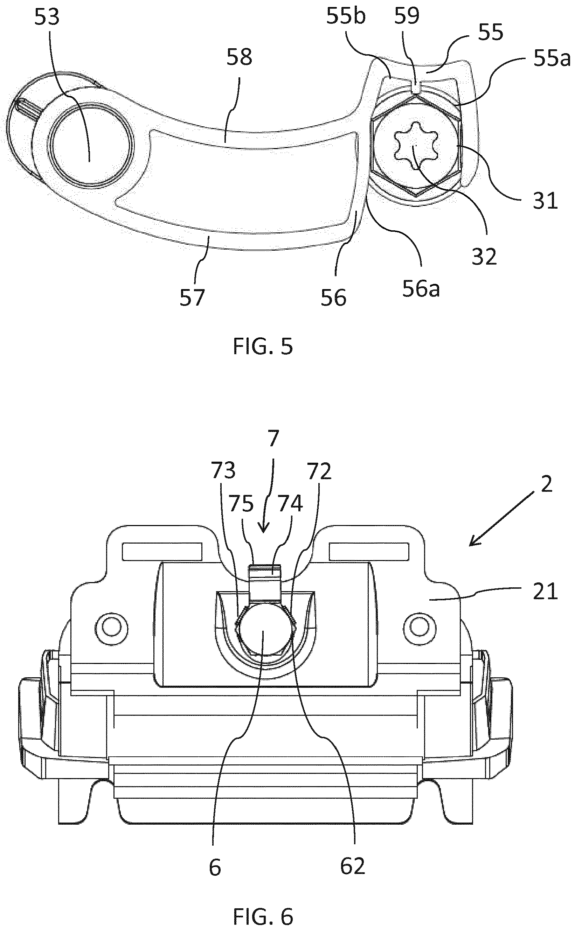

In the following, the construction of the thread lock mechanism of the load carrier foot according to first embodiment of the present subject matter will be described in detail with reference to Figures 4 and 5. Figures 4 and 5 each show a sectional view of the thread lock mechanism 5 in a plane perpendicular to the pivot pin 53.

The swivel arm 5 forming an engagement device of the load carrier foot according to the first embodiment, comprises two arcuate walls 57, 58 radially extending from the pivot pin 53 and connected at their radial outer ends by means of a connecting wall 56. Furthermore, the swivel arm comprises a plate 52 connecting the lateral ends of the walls 57, 58 on one side. At a connecting portion at which the connecting wall 56 is connected with the arcuate wall 58, an engagement wall 55 is formed in a claw-like manner. In other words, the engagement wall extends from a radial outer portion of the arcuate wall 58 and forms a U-shape which is open on the side where the tensioning screw 3 is positioned.

The engagement wall 55 comprises an engagement surface 55a which is arranged so as to face an engagement surface 56a of the connecting wall 56. More precisely, the engagement wall 55a and the engagement wall 56a are arranged in such a manner that a rotation of the swivel arm 5 in the clockwise direction arranges the walls 55a and 56a on opposite sides of the tensioning screw. The distance between the walls 55a and 56a is smaller than the maximum outer diameter of the engagement portion or screw head 31 of the tensioning screw 3. On a bottom surface 55b of the engagement wall 55, a protrusion 59 is formed functioning as a stop. In order to lock a rotation of the tensioning screw 3, the swivel arm 5 is rotated in the clockwise direction until the stop 59 abuts against the engagement portion of the tensioning screw 3.

Figure 5 shows a state in which the rotation of the tensioning screw 3 is locked by the swivel arm 5. The engagement walls 55a and 56a are in contact with opposite flats of the hexagonally formed screw head 31 of the tensioning screw 3. Accordingly, a rotation of the tensioning screw 3 is locked. In the arrangement shown in Figure 5, the opposite flats of the screw head 31 being in contact with the engagement walls 55a and 56a are substantially aligned with the engagement walls. However, an engagement of the engagement device 51 of the swivel arm 5 with the screw head 31 of the tensioning screw 3 is also possible in case the flats of the screw head 31 are not aligned with the engagement walls 55a and 56a.

In order to provide a secure engagement with the engagement portion of the tensioning screw 3, the walls 55 and 56 of the swivel arm 5 can be made of a flexible material. Accordingly, in case the flats of the screw head 31 are not aligned with the engagement walls 55a and 56a so that the distance between both walls is smaller than the effective engaging diameter of the screw head 31 being the maximum distance between the two points of the screw head 31 which will get into contact with the walls 55a and 56a. Due to the flexibility of the walls, the engaging walls 55a and 56a are resiliently pushed away from each other upon engaging the engaging portion 51 with the screw head 31 so that the engagement is possible. Due to the resiliency, a force is exerted on the screw head by the engaging walls 55a and 56a enabling the screw to slightly rotate in one direction. As soon as the engaging walls 55a and 56a are substantially aligned with the flats of the screw head 31, the force exerted on the flats of the screw head 31 by the engaging walls 55a, 56a will be the smallest. Accordingly, in case the screw is rotated further from that position, the engaging walls 55a, 56a will exert a force on the screw head 31 counteracting such a rotation.

The resiliency of the engaging walls 55a and 56a can be achieved by forming the same by a corresponding material. In order to render the swivel arm 5 more rigid, it is possible to form the plate 52 with a material which is more rigid than the material of which the engaging walls 55a and 56a are made. The plate 52 and the walls 55a and 56a can be integrally formed by casting.

In order to securely prevent the swivel arm 5 from rotating in a disengaging direction, the cover 4 is formed with a protrusion (not shown) which is in contact with the operating section 54 when the cover 4 is mounted. Thus, the rotation of the swivel arm 5 can be securely prevented during use of the load carrier foot.

### EMBODIMENT 2

Figure 6 shows a load carrier foot according to a second embodiment of the present subject matter. The load carrier foot according to the second embodiment generally comprises the same appearance as the load carrier foot shown in Figure 1 when the cover is mounted thereon but differs from the load carrier foot according to the first embodiment in the construction of the thread lock mechanism. Furthermore, a different kind of tensioning screw is used in the second embodiment.

A construction of the thread lock mechanism according to the second embodiment will be described in detail with reference to Figures 6 to 9 in the following.

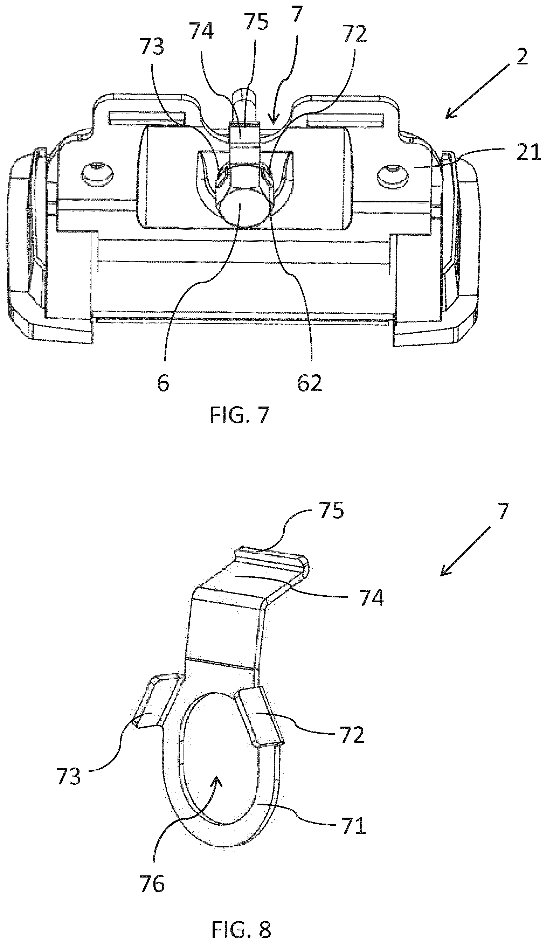

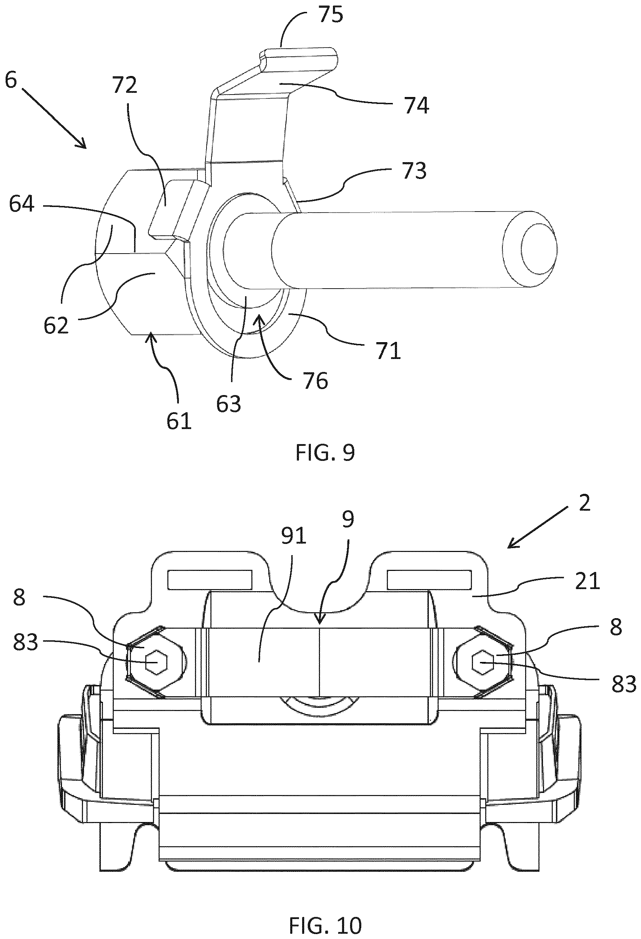

Figures 6 and 7 show a mounting structure 2, a tensioning screw 6 and a thread lock mechanism comprising a locking element 7 of a load carrier foot 1 according to the second embodiment of the present subject matter in a front view and in a perspective view, respectively. Figure 8 shows a detailed perspective view of the locking element 7. The arrangement of the locking element 7 with respect to the tensioning screw 6 is shown in Figure 9.

As is shown in these Figures, the locking element 7 comprises engagement walls 72 and 73. The engagement walls 72, 73 are in contact with two flats 62 of a screw head 61 of a tensioning screw 6. The locking element 7 is movable with respect to the tensioning screw 6 so that the engagement walls 72 and 73 are also movable towards and away from the flats 62 of the tensioning screw 6.

According to the arrangement shown in Figure 6, the tensioning screw 6 is arranged substantially horizontally and the locking element 7 and the engagement walls 72, 73 thereof rest on the flats 62 of the tensioning screw 6. Upon rotation of the tensioning screw 6, the engagement walls 72, 73 ride over the flats and the corners of the screw head by performing an up and down movement in the vertical direction without exerting a significant force on the flats of the tensioning screw 6. In other words, since it is possible to push the engagement walls 72, 73 in the upward direction, the rotation of the tensioning screw 6 is unlocked as long as a movement of the locking element 7 is possible.

The construction of the thread lock mechanism comprising the locking element 7 is shown in Figures 8 and 9. The locking element 7 of the thread lock mechanism of the load carrier foot according to the second embodiment comprises a substantially flat base portion 71 and a crooked portion 74 connected to the base portion 71 at an angle. The base portion 71 comprises an opening 76 as well as two engagement walls 72 and 73. The opening 76 is a through-hole comprising a slit shape. At one end of the slit-shaped opening 76, the engagement walls 72 and 73 are arranged on opposite sides of the opening 76 and at an angle with respect to each other.

According to the embodiment, the angle spanned between the engagement walls 72 and 73 is about 60° and corresponds to an angle spanned between two flats 62 of the tensioning screw 6. As is also shown in Figure 8, the engagement walls 72 and 73 extend substantially perpendicular to the base portion 71. Furthermore, the engagement walls 72, 73 are integrally formed with the base portion 71. As is further shown in Figure 9, the engagement walls 72 and 73 comprise a dimension still allowing to use the hex cap screw head of the tensioning screw 6 as a drive with which a wrench can be engaged for rotating the tensioning screw 6. More precisely, the engagement walls 72, 73 comprise a width which is smaller than the width of the flats 62 of the screw head 61 and comprise a height which is smaller than the height of the screw head 61.

The crooked portion 74 comprises an abutment portion 75. The abutment portion 75 is formed so as to be engageable with a corresponding counter portion of the cover 4 in order to block the movement of the locking element 7.

The functioning of the locking element 7 is described with reference to Figure 9. As is shown, the tensioning screw 6 is inserted into the opening 76 of the base portion 71. The tensioning screw 6 comprises a stepped portion 63 comprising a height which substantially corresponds to the thickness of the base portion 71 and comprises an outer diameter which is slightly smaller than the width of the opening 76. Accordingly, the locking element 7 is movably guided by the stepped portion 73 of the tensioning screw 6. In case the movement of the locking element is blocked by placing the cover 4 in contact with the abutment portion 75, the engagement walls 72 and 73 are kept in contact with the flats 62 of the screw head 61. Accordingly, the rotation of the tensioning screw 6 is locked.

The crooked portion 74 comprises a certain flexibility in order to compensate for a misalignment of the flats 62 with respect to the engagement walls 72 and 73. In other words, in case the screw head 61 is in a position in which the engagement walls 72 and 73 contact corner portions 64 of the screw head 61, the locking element 7 is in a position in which it is offset in the vertical upward direction. In case the cover 4 is arranged on the load carrier foot 1 and contacts the abutment portion 75, the crooked portion 74 is resiliently bent and exerts a pushing force on the base portion 71 pushing the same in the vertical downward direction. Accordingly, the engagement walls 72 and 73 exert a pushing force on the corner portions 64 of the screw head 61. Consequently, the tensioning screw 6 is able to rotate until the engagement walls 72 and 73 abut against the two flats 62. When the flats 62 are aligned with the engagement walls 72 and 73, the engagement walls 72 and 73 rest on the flats and do not exert a significant force thereon. However, in case the tensioning screw is rotated due to self-rotation, the engagement walls 72 and 73 will exert a pushing force on the corner of the screw head. This pushing force counteracts the rotation of the tensioning screw.

### EMBODIMENT 3

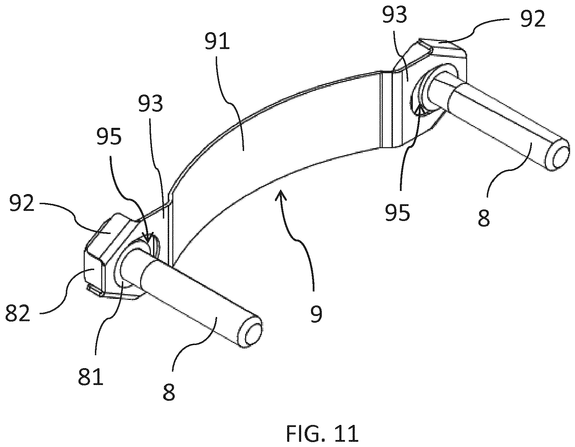

In the following, the construction of a load carrier foot according to a third embodiment of the present subject matter will be described in detail with reference to Figures 10 and 11. Contrary to the first and second embodiments described above, the load carrier foot according to the third embodiment comprises two tensioning screws 8.

The thread lock mechanism of the load carrier foot according to the third embodiment comprises a clamp 9 which is pretensioned and exerts a pressing force on the engaging portion of the tensioning screws 8. Similar to the tensioning screws according to the first and second embodiment, the tensioning screw 8 according to the third embodiment comprises a screw head having a hexagonal shape and forming the engagement portion of the tensioning screw 8. The screw head furthermore comprises an internal drive 83.

The clamp 9 has an arcuate shape and comprises two ends at which engagement device 93 are formed. More precisely, two engagement walls 92 and 94 are formed in each engagement device 93. Similar to the second embodiment, engagement walls 92 and 94 are arranged spaced from each other at an angle corresponding to the angle of two flats 82 of the screw head of the tensioning screws 8. As is shown in Figures 10 and 11, the engagement walls 92 and 94 are arranged at the ends of the clamp 9. The engagement device 93 of the clamp 9 are connected to each other by an arcuate portion 91. In each engagement device 93, a slit-shaped opening 95 is formed extending in the longitudinal direction of clamp 9. The tensioning screw 8 is accommodated in the slit-shaped opening 95. The engagement device of the clamp 9 are moveable with respect to the tensioning screw 8. Furthermore, the arcuate portion 91 provides flexibility and pretensions the engagement portions 93 towards each other. Accordingly, the engagement walls 92 and 94 are pressed against the engagement portions, that is the screw heads of the tensioning screws 8. As is shown in Figure 11, the engagement device 93 of the clamp 9 comprise a substantially flat base portion. The engagement walls 92 and 94 extend substantially perpendicular to the base portion. Furthermore, the clamp 9 is integrally formed of sheet metal by bending.

### EMBODIMENT 4

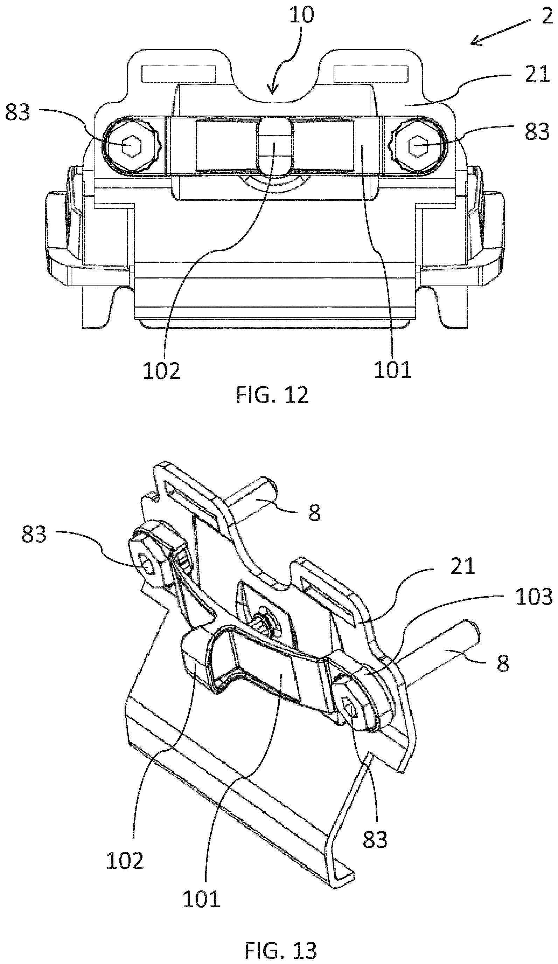

A fourth embodiment of the present subject matter is described with reference to Figures 12 to 14. The load carrier foot according to the fourth embodiment differs from the third embodiment in the construction of the thread lock mechanism.

The thread lock mechanism according to the fourth embodiment is realized as a clamp 10 comprising two engaging portions 103 having engaging structures 104. The clamp 10 comprises an arcuate portion 101 and an operating portion 102. However, contrary to the third embodiment in which the clamp 9 is pretensioned such that the engagement device 93 exert a pushing force on the tensioning screw 8, the engagement device 103 are not engaged with the engagement portion of the tensioning screws 8 in case the clamp 10 is not operated at the operating portion 102. In other words, the clamp 10 is not pretensioned. In order to engage the engaging portions 103 with the engagement portions of the tensioning screws 8, the operating portion 102 has to be pushed in a direction parallel to the longitudinal direction of the tensioning screws 8 and towards the support 21. In this case, the engaging portions 103 are moved in a direction substantially perpendicular to the longitudinal axis of the tensioning screws 8 thereby engaging with the engagement portion formed by the screw heads of the tensioning screw 8.

### EMBODIMENT 5

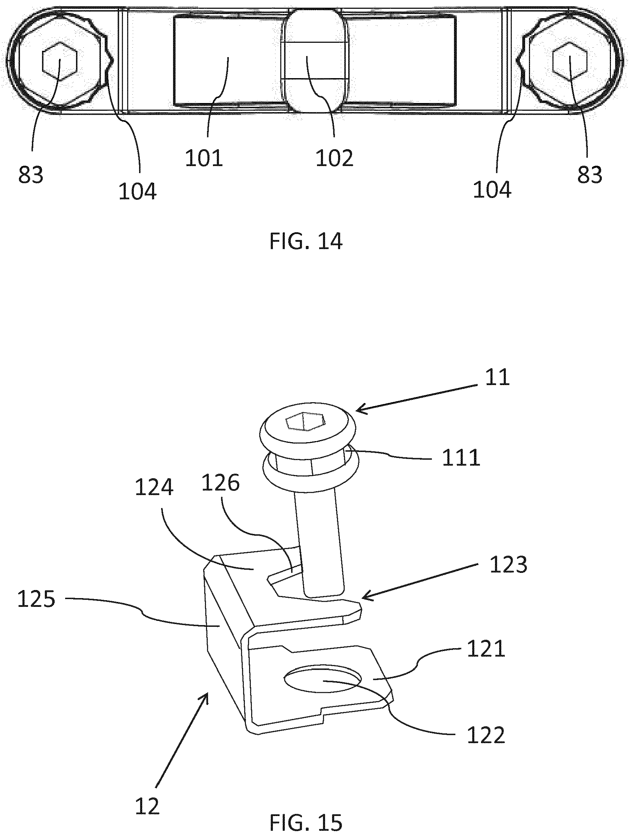

In Figure 15, a thread lock mechanism of a load carrier foot according to a fifth embodiment of the present subject matter is described. The thread lock mechanism is in the form of a bracket 12 comprising a lower bracket portion 121, an upper bracket portion 124 and a connecting portion 125 connecting the lower bracket portion 121 with the upper bracket portion 124.

As is obvious from Figure 15, in the embodiment, the bracket 12 is integrally formed. More precisely, the different portions as described before are formed by bending a sheet metal in such a manner that the portions are arranged rectangular with respect to each other. Accordingly, the upper bracket portion 124 and the lower bracket portion 121 are arranged parallel to each other. As is also shown in Figure 15, the lower bracket portion 121 comprises an opening 122 into which the tensioning screw 11 is insertable. Furthermore, the upper bracket portion 124 comprises a recess 123 for engagement with an engagement portion 111 of the tensioning screw 11. The recess 123 comprises multiple walls 126. The walls 126 are arranged at an angle corresponding to the angles at which the flats of the hexagonal engagement portion 111 are arranged. The brackets 12 can be designed such that no pushing force is exerted on the flats of the engagement portions 111 in case the flats are aligned with the walls 126. On the other hand, it is possible to form the bracket 12 such that in the latter mentioned case, a slight pushing force is exerted on the flats of the engagement portion 111. In either case, the rotation of the tensioning screw 11 is prevented by a contact of the engaging walls 126 with the flats of the engagement portion 111. In case the tensioning screw 11 is rotated, the upper bracket portion 124 is pushed away in a direction substantially perpendicular to the longitudinal axis of the tensioning screw 11 and, due to its resiliency, exerts a pushing force on the engagement portion 111 of the tensioning screw 11. By this, a force counteracting the rotation of the screw 11 is exerted on the engagement portion 111. According to the embodiment, the bracket 12 is designed to at least exert a pushing force on the engagement portion 111 in case the flats of the engagement portion 111 are not aligned with the engagement walls 126. Such pushing force is predetermined such that a self-rotation of the tensioning screw 11 is prevented. On the other hand, the pushing force is also predetermined such that the tensioning screw 11 can be rotated by using a wrench.

### EMBODIMENT 6

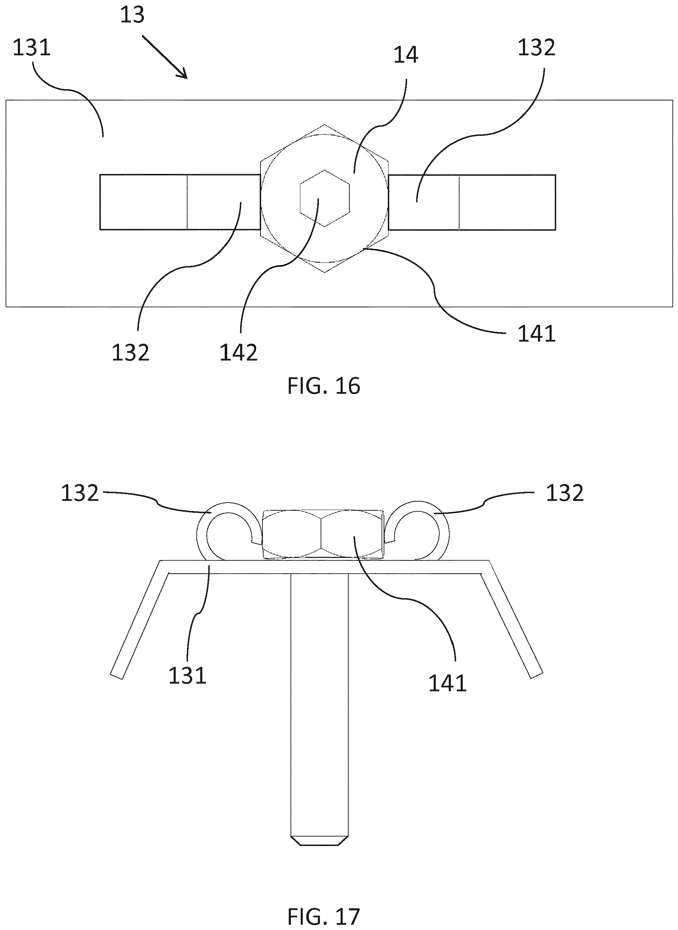

In Figures 16 and 17, a load carrier foot according to a sixth embodiment of the present subject matter is shown. The general configuration of the load carrier foot is the same as that shown in Figure 1 and the load carrier foot according to the sixth embodiment differs from the one of Figure 1 in the construction of the thread lock mechanism. Therefore, for the sake of conciseness, only the thread lock mechanism of the load carrier foot according to the sixth embodiment is shown in Figures 16 and 17.

The thread lock mechanism in the load carrier foot according to the sixth embodiment of the present subject matter mainly consists of a clamping element 13. The clamping element 13 comprises a base element having a rectangular shape in a plan view as shown in Figure 16. The base element 131 comprises an opening (not shown) into which a tensioning screw 14 can be inserted. As is shown in Figure 17, the clamping element has two bent sections and two curled protrusions 132 are formed on both sides of the screw head 141 of the tensioning screw 14.

The curled portions 132 are arranged so as to abut the screw head 141 from both sides thereby clamping the same between them. Due to the curled configuration of the curled protrusions 132, the curled protrusions 132 comprise a certain flexibility. Accordingly, depending on the configuration, the curled protrusions 132 exert a force on the screw head 141 regardless of the rotational position of the tensioning screw 14 or is arranged such that no force is applied on the screw 14 in case the flats of the screw head 141 are aligned with a contact portion of the curled protrusions 132.

The clamping element 13 is constructed such that at least in case flats of the screw head 141 are not aligned with the abutment portions of the curled protrusions 132 a force is applied on the screw head such that a force is applied on the screw head 141 counteracting the rotation of the tensioning screw 14. According to the embodiment, the curled protrusions 132 are constructed such that the force actable on the screw head 141 is predetermined such that a self-rotation of the tensioning screw 14 is prevented while a rotation of the tensioning screw 14 using a wrench engaged with a screw drive 142 enables the rotation of the tensioning screw 14. Accordingly, an easy and reliable thread lock mechanism is provided.

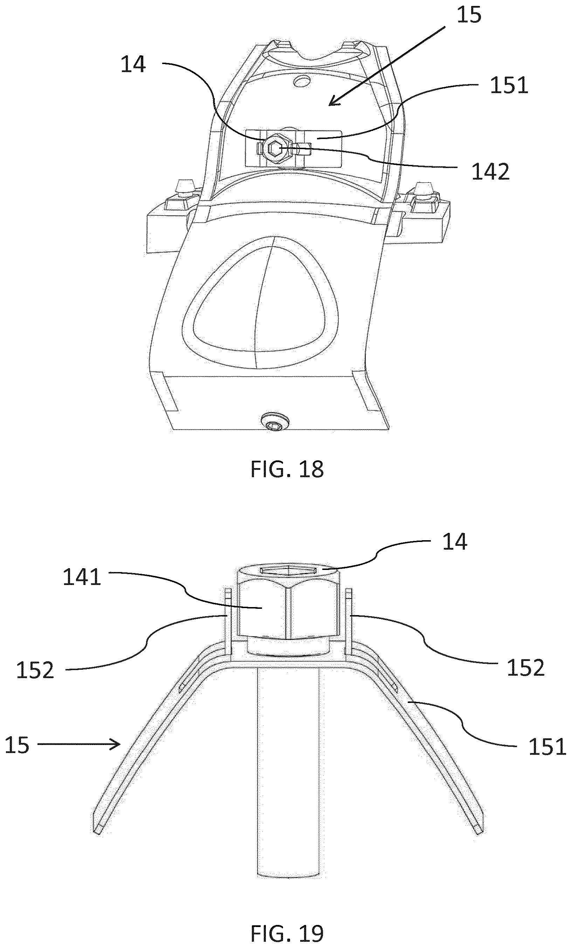

A modification of the sixth embodiment is described with reference to Figures 18 and 19. According to the modification, the supporting element of the load carrier foot and the thread lock mechanism comprise a different construction. Instead of the curled protrusions 132, the protrusions are formed as straight walls 152 on a base element 151. Furthermore, contrary to the configuration with the curled protrusions 132, the walls 152 are arranged such that when flats of the screw head 141 are positioned in parallel to the walls 152, a distance is provided between the walls 152 and the flats. The walls 152 can also be formed inclined towards the engagement portion of the tensioning screw 14, i.e. towards the screw head 141. Accordingly, an arrangement can be provided in which the free ends of the walls 152 are nearer to the flats than the root sections of the walls 152 at which the walls 152 are connected to the base element 131. The walls 152 can be leaned against the screw head 141 with their free ends. In this configuration, the distance between the free ends of the walls and the flats of the screw head 141 can be very small, i.e. close to zero, or it is even possible to arrange the wall such that no distance is provided between the free ends of the walls and the engagement portion. In the latter case, the free ends always contact the screw head (not shown). In either case, the flexibility of the walls 152 is adapted so that the walls 152 or at least their free ends are moved away from each other when the screw head 141 is turned.

### EMBODIMENT 7

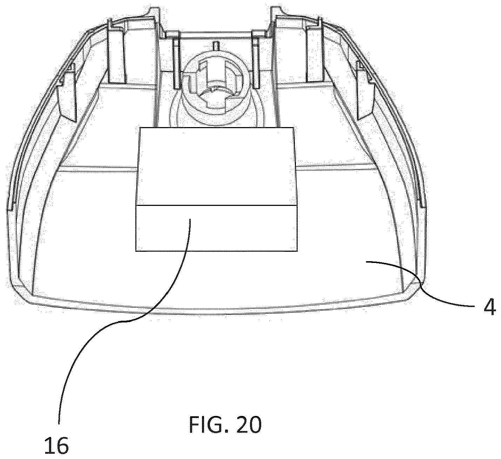

In Figure 20, a further preferable embodiment of the present subject matter is shown. The construction of the load carrier foot according to this embodiment corresponds to the general construction of the load carrier foot shown in Figure 1. Furthermore, the interior of the load carrier foot is similar to the construction shown in Figure 2 with the difference that the swivel arm 5 is omitted here.

According to the embodiment, the engagement device is an elastic element 16 made of a plastic foam material, preferably polyurethane foam. The elastic element 16 is fixed on the inner side of cover 4 at a position at which it faces an axial end surface of the screw head 31 of the tensioning screw 3 when the cover 4 is mounted on the load carrier foot 1. The elastic element 16 is dimensioned so that it abuts against the end surface of the screw head when the cover 4 is mounted. More precisely, the elastic element 16 is dimensioned so that it is deformed by the screw head and exerts a pushing force on the end surface of the screw head of the tensioning screw. Consequently, a force is applied on the screw head counteracting a rotation of the screw 3.

## Claims

1. Load carrier foot (1) having a mounting structure (2) for mounting the load carrier foot on a vehicle, a tensioning screw (3; 6; 8; 11; 14) and a thread lock mechanism (5; 7; 9; 10; 12; 13; 15; 16) for preventing the tensioning screw (3; 6; 8; 11; 14) from coming loose, wherein the tensioning screw (3; 6; 8; 11; 14) comprises an engagement portion (31; 61; 82; 111; 141) formed in the outer periphery thereof and wherein the thread lock mechanism (5; 7; 9; 10; 12; 13; 15; 16) comprises an engagement device (51; 71; 93; 103; 123; 132; 152) engageable with the engagement portion (31; 61; 82; 111; 141) of the tensioning screw (3; 6; 8; 11; 14) **characterized in that**
the engagement portion (31; 61; 82; 111; 141) is polygonally shaped, preferably hexagonally shaped and wherein the engagement device (51; 71; 93; 103; 123; 132; 152) comprises engagement walls (55a, 56a; 72, 73; 92; 104; 126; 132; 152) contactable with the engagement portion (31; 61; 82; 111; 141) and being movable with respect to the engagement portion (31; 61; 82; 111; 141).

2. Load carrier foot according to claim 1, wherein the engagement walls (55a, 56a; 72, 73; 92; 104; 126; 132; 152) are resilient.

3. Load carrier foot according to one of claims 1 or 2, wherein the engagement walls (55a, 56a; 132; 152) are provided on opposite sides of the engagement portion (31; 141).

4. Load carrier foot according to one of claims 1 or 2, wherein two of the engagement walls (72, 73; 92; 104; 126) are arranged at an angle.

5. Load carrier foot according to one of the preceding claims, the thread lock mechanism further comprising a swivel arm (5), the swivel arm (5) being mounted on the mounting structure (2) pivotably about a pivot axis substantially parallel to the longitudinal axis of the tensioning screw (3) and being pivotably in a pivot plane perpendicular to the pivot axis, wherein the engagement device (51) is provided on the swivel arm (5) and is engageable with the engagement portion (31) by a pivoting motion of the swivel arm (5) in the pivot plane.

6. Load carrier foot according to claim 5, wherein the engagement device (51) is formed as a claw-like portion adapted to partially surround the engagement portion (31), comprises at least two contact areas contacting the outer surface of the engagement portion (31) and comprises an opening which is open in the engagement direction.

7. Load carrier foot according to one of claims 5 or 6, wherein the swivel arm (5) comprises a plate (52) extending substantially in the pivot plane and walls (55, 56, 57, 58) extending substantially perpendicular to the plate (52).

8. Load carrier foot according to claim 4, wherein the engagement device (71; 103) is lockably movable in a direction perpendicular to the longitudinal axis of the tensioning screw (6; 8) and wherein the load carrier foot preferably comprises a cover (4) for blocking the movement of the engagement device (71; 103).

9. Load carrier foot according to claim 4, wherein the engagement device (93, 123) is pre-stressed so as to continuously apply a force on the engagement portion (82; 111) in a direction perpendicular to the longitudinal axis of the tensioning screw (8; 11).

10. Load carrier foot according to claim 3, wherein the engagement portion (31; 141) comprises an even number of flats and wherein the distance between the two engagement walls (55a, 56a; 132; 152) is smaller than the maximum outer diameter of the engagement portion (31; 141).

11. Load carrier foot according to one of claims 2 to 4 and 8 to 10, wherein the thread lock mechanism (7; 9; 10; 12; 13; 15) comprises an opening (76; 95; 122) accommodating the tensioning screw, wherein the engagement device is preferably integrally formed from sheet metal by bending, and wherein the walls are formed straight or curled.

12. Load carrier according to one of the preceding claims, wherein the engagement device is adapted to apply a predetermined torque on the engaging portion, the predetermined torque counteracting a loosening torque of the tensioning screw.

13. Load carrier according to one of claim 1, wherein the engagement device is an elastic element (16) preferably made of a plastic foam material which is pushable against the engagement portion of the tensioning screw.

## Patentansprüche

1. Lastträgerfuß (1), der eine Montagestruktur (2) zum Montieren des Lastträgerfußes an einem Fahrzeug, eine Spannschraube (3; 6; 8; 11; 14) sowie einen Gewindesicherungsmechanismus (5; 7; 9; 10; 12; 13; 15; 16) aufweist, um zu vermeiden, dass sich die Spannschraube (3; 6; 8; 11; 14) lockert, wobei die Spannschraube (3; 6; 8; 11; 14) einen Formschlussabschnitt (31; 61; 82; 111; 141) umfasst, der im Außenumfang davon ausgebildet ist und wobei der Gewindesicherungsmechanismus (5; 7; 9; 10; 12; 13; 15; 16) eine Formschlussvorrichtung (51; 71; 93; 103; 123; 132; 152) umfasst, die mit dem Formschlussabschnitt (31; 61; 82; 111; 141) der Spannschraube (3; 6; 8; 11; 14) formschlüssig verbindbar ist, **dadurch gekennzeichnet, dass**
der Formschlussabschnitt (31; 61; 82; 111; 141) vieleckig geformt ist, vorzugsweise sechseckig geformt ist, und wobei die Formschlussvorrichtung (51; 71; 93; 103; 123; 132; 152) Formschlusswände (55a, 56a; 72, 73; 92; 104; 126; 132; 152) umfasst, die mit dem Formschlussabschnitt (31; 61; 82; 111; 141) in Berührung bringbar sind und bezogen auf den Formschlussabschnitt (31; 61; 82; 111; 141) beweglich sind.

2. Lastträgerfuß nach Anspruch 1, wobei die Formschlusswände (55a, 56a; 72, 73; 92; 104; 126; 132; 152) federnd sind.

3. Lastträgerfuß nach Anspruch 1 oder 2, wobei die Formschlusswände (55a, 56a; 132; 152) auf gegenüberliegenden Seiten des Formschlussabschnitts (31; 141) vorgesehen sind.

4. Lastträgerfuß nach Anspruch 1 oder 2, wobei zwei der Formschlusswände (72, 73; 92; 104; 126) unter einem Winkel angeordnet sind.

5. Lastträgerfuß nach einem der vorhergehenden Ansprüche, wobei der Gewindesicherungsmechanismus ferner einen Schwenkarm (5) umfasst, wobei der Schwenkarm (5) an der Montagestruktur (2) schwenkbar um eine Schwenkachse im Wesentlichen parallel zur Längsachse der Spannschraube (3) montiert ist und in einer Schwenkebene senkrecht zur Schwenkachse schwenkbar ist, wobei die Formschlussvorrichtung (51) an dem Schwenkarm (5) vorgesehen und durch eine Schwenkbewegung des Schwenkarms (5) in der Schwenkebene mit dem Formschlussabschnitt (31) formschlüssig verbindbar ist.

6. Lastträgerfuß nach Anspruch 5, wobei die Formschlussvorrichtung (51) als klauenartiger Abschnitt ausgebildet ist, der so ausgelegt ist, dass er den Formschlussabschnitt (31) teilweise umgibt, mindestens zwei Kontaktbereiche umfasst, die die Außenfläche des Formschlussabschnitts (31) berühren, und eine Öffnung umfasst, die in der Formschlussrichtung offen ist.

7. Lastträgerfuß nach Anspruch 5 oder 6, wobei der Schwenkarm (5) eine Platte (52) umfasst, die im Wesentlichen in der Schwenkebene verläuft, sowie Wände (55, 56, 57, 58), die im Wesentlichen senkrecht zu der Platte (52) verlaufen.

8. Lastträgerfuß nach Anspruch 4, wobei die Formschlussvorrichtung (71; 103) in einer Richtung senkrecht zur Längsachse der Spannschraube (6; 8) arretierbar beweglich ist und wobei der Lastträgerfuß vorzugsweise eine Abdeckung (4) zum Blockieren der Bewegung der Formschlussvorrichtung (71; 103) umfasst.

9. Lastträgerfuß nach Anspruch 4, wobei die Formschlussvorrichtung (93, 123) vorgespannt ist, damit sie kontinuierlich eine Kraft auf den Formschlussabschnitt (82; 111) in einer Richtung senkrecht zur Längsachse der Spannschraube (8; 11) ausübt.

10. Lastträgerfuß nach Anspruch 3, wobei der Formschlussabschnitt (31; 141) eine gerade Anzahl von Seitenflächen umfasst und wobei der Abstand zwischen den beiden Formschlusswänden (55a, 56a; 132; 152) geringer ist als der maximale Außendurchmesser des Formschlussabschnitts (31; 141).

11. Lastträgerfuß nach einem der Ansprüche 2 bis 4 und 8 bis 10, wobei der Gewindesicherungsmechanismus (7; 9; 10; 12; 13; 15) eine Öffnung (76; 95; 122) umfasst, die die Spannschraube aufnimmt, wobei die Formschlussvorrichtung vorzugsweise einteilig aus Blech durch Biegen hergestellt ist, und wobei die Wände gerade oder eingerollt ausgebildet sind.

12. Lastträger nach einem der vorhergehenden Ansprüche, wobei die Formschlussvorrichtung so ausgelegt ist, dass sie ein vorgegebenes Drehmoment auf den Formschlussabschnitt ausübt, wobei das vorgegebene Drehmoment einem Lösemoment der Spannschraube entgegenwirkt.

13. Lastträger nach Anspruch 1, wobei die Formschlussvorrichtung ein elastisches Element (16) ist, das vorzugsweise aus einem Schaumstoffmaterial gefertigt ist, das gegen den Formschlussabschnitt der Spannschraube drückbar ist.

## Revendications

1. Pied support de charge (1) comportant une structure de montage (2) pour monter le pied support de charge sur un véhicule, une vis de serrage (3 ; 6 ; 8 ; 11 ; 14) et un mécanisme de blocage de filet (5 ; 7 ; 9 ; 10 ; 12 ; 13 ; 15 ; 16) pour empêcher la vis de serrage (3 ; 6 , 8 ; 11 ; 14) de se desserrer, la vis de serrage (3 ; 6, 8 ; 11 ; 14) comprenant une partie de prise (31 ; 61 ; 82 ; 111 ; 141) formée dans la périphérie extérieure de celle-ci et le mécanisme de blocage de filet (5 ; 7 ; 9 ; 10 ; 12 ; 13 ; 15 ; 16) comprenant un dispositif de prise (51 ; 71 ; 93 ; 103 ; 123 ; 132 ; 152) pouvant être mis en prise avec la partie de prise (31 ; 61 ; 82 ; 111 ; 141) de la vis de serrage (3 ; 6 ; 8 ; 11 ; 14) **caractérisé en ce que**
la partie de prise (31 ; 61 ; 82 ; 111 ; 141) est en forme de polygone, de préférence en forme d'hexagone, le dispositif de prise (51 ; 71 ; 93 ; 103 ; 123 ; 132 ; 152) comprenant des parois de prise (55a, 56a ; 72, 73 ; 92 ; 104 ; 126 ; 132 ; 152) pouvant être mises en contact avec la partie de prise (31 ; 61 ; 82 ; 111 ; 141) et étant mobiles par rapport à la partie de prise (31 ; 61 ; 82 ; 111 ; 141).

2. Pied support de charge selon la revendication 1, dans lequel les parois de prise (55a, 56a ; 72, 73 ; 92 ; 104 ; 126 ; 132 ; 152) sont résilients.

3. Pied support de charge selon la revendication 1 ou 2, dans lequel les parois de prise (55a, 56a ; 132 ; 152) sont prévues sur des côtés opposés de la partie de prise (31 ; 141).

4. Pied support de charge selon la revendication 1 ou 2, dans lequel deux des parois de prise (72, 73 ; 92 ; 104 ; 126) sont agencées selon un angle.

5. Pied support de charge selon l'une des revendications précédentes, le mécanisme de blocage de filet comprenant en outre un bras pivotant (5), le bras pivotant (5) étant monté sur la structure de montage (2) de manière pivotante sur un axe de pivotement sensiblement parallèle à l'axe longitudinal de la vis de serrage (3) et étant pivotant dans un plan de pivotement perpendiculaire à l'axe de pivotement, le dispositif de prise (51) étant prévu sur le bras pivotant (5) et pouvant être mis en prise avec la partie de prise (31) par un mouvement de pivotement du bras pivotant (5) dans le plan de pivotement.

6. Pied support de charge selon la revendication 5, dans lequel le dispositif de prise (51) se présente sous la forme d'une partie semblable à une griffe adaptée pour entourer partiellement la partie de prise (31), comprend au moins deux zones de contact en contact avec la surface extérieure de la partie de prise (31) et comprend une ouverture qui est ouverte dans la direction de la mise en prise.

7. Pied support de charge selon la revendication 5 ou 6, dans lequel le bras pivotant (5) comprend une plaque (52) s'étendant sensiblement dans le plan de pivotement et des parois (55, 56, 57, 58) s'étendant sensiblement perpendiculairement à la plaque (52).

8. Pied support de charge selon la revendication 4, dans lequel le dispositif de prise (71 ; 103) est mobile de manière verrouillable dans une direction perpendiculaire à l'axe longitudinal de la vis de serrage (6 ; 8) et dans lequel le pied support de charge comprend de préférence un couvercle (4) pour bloquer le mouvement du dispositif de prise (71 ; 103).

9. Pied support de charge selon la revendication 4, dans lequel le dispositif de prise (93, 123) est précontraint de manière à appliquer une force en continu sur la partie de prise (82 ; 111) dans une direction perpendiculaire à l'axe longitudinal de la vis de serrage (8 ; 11).

10. Pied support de charge selon la revendication 3, dans lequel la partie de prise (31 ; 141) comprend un nombre pair de facettes et dans lequel la distance entre les deux parois de prise (55a, 56a; 132 ; 152) est inférieure au diamètre extérieur maximal de la partie de prise (31 ; 141).

11. Pied support de charge selon l'une des revendications 2 à 4 et 8 à 10, dans lequel le mécanisme de blocage de filet (7 ; 9 ; 10 ; 12 ; 13 ; 15) comprend une ouverture (76 ; 95 ; 122) recevant la vis de serrage, le dispositif de prise étant de préférence formé d'un seul tenant par cintrage à partir de tôle métallique, et les parois étant formées droites ou bordées.

12. Support de charge selon l'une des revendications précédentes, dans lequel le dispositif de prise est adapté pour appliquer un couple prédéfini sur la partie en prise, le couple prédéfini contrecarrant un couple de desserrage de la vis de serrage.

13. Support de charge selon la revendication 1, dans lequel le dispositif de prise est un élément élastique (16) de préférence fabriqué en une mousse plastique, qui peut être appuyée contre la partie de prise de la vis de serrage.
